(19) Europäisches Patentamt
European Patent Office
Office européen des brevets

(11) **EP 3 775 524 B1**

(12) **FASCICULE DE BREVET EUROPEEN**

(45) Date de publication et mention
de la délivrance du brevet:
**01.06.2022 Bulletin 2022/22**

(21) Numéro de dépôt: **19721000.8**

(22) Date de dépôt: **09.04.2019**

(51) Classification Internationale des Brevets (IPC):
*F02K 1/82* $^{(2006.01)}$     *F02C 7/045* $^{(2006.01)}$
*G10K 11/172* $^{(2006.01)}$

(52) Classification Coopérative des Brevets (CPC):
**F02K 1/827; F02C 7/045; G10K 11/172;**
F05D 2250/184; F05D 2250/185; Y02T 50/60

(86) Numéro de dépôt international:
**PCT/FR2019/050829**

(87) Numéro de publication internationale:
**WO 2019/197773 (17.10.2019 Gazette 2019/42)**

(54) **PANNEAU DE TRAITEMENT ACOUSTIQUE POUR TURBOREACTEUR**

SCHALLDÄMMPLATTE FÜR EIN TURBOSTRAHLTRIEBWERK

ACOUSTIC TREATMENT PANEL FOR A TURBOJET ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.04.2018 FR 1853240**

(43) Date de publication de la demande:
**17.02.2021 Bulletin 2021/07**

(73) Titulaire: **SAFRAN AIRCRAFT ENGINES
75015 Paris (FR)**

(72) Inventeurs:
• **GONZALEZ, Jéremy Paul Francisco
77550 MOISSY-CRAMAYEL (FR)**
• **JODET, Norman Bruno André
77550 MOISSY-CRAMAYEL (FR)**
• **RIOU, Georges Jean Xavier
77550 MOISSY-CRAMAYEL (FR)**

(74) Mandataire: **Cabinet Beau de Loménie
158, rue de l'Université
75340 Paris Cedex 07 (FR)**

(56) Documents cités:
**FR-A1- 2 962 586    US-A1- 2010 206 664**

## Description

### Arrière-plan de l'invention

L'invention concerne la propagation acoustique des systèmes de propulsion exploitant des turbomachines carénées et, plus particulièrement, une technologie de traitement acoustique pour atténuer le bruit rayonné par l'interaction entre un ou des rotors et son environnement.

Classiquement, le traitement acoustique d'un turboréacteur, et plus précisément du bruit rayonné par l'interaction entre le rotor et son environnement, est fait à l'aide de panneaux absorbants disposés au niveau des surfaces mouillées du conduit dans lequel se propagent les ondes sonores. On entend par surfaces mouillées, les surfaces en contact avec un écoulement fluide. Ces panneaux sont des matériaux composites de type sandwich emprisonnant un nid d'abeille, dont les propriétés absorbantes sont en partie obtenues grâce au principe des résonateurs de Helmholtz.

Un résonateur de Helmholtz est constitué d'une cavité résonante et d'un ou plusieurs col(s) s'étendant à l'intérieur de la cavité chacun depuis un orifice formé dans une paroi et permettant à la cavité résonante de communiquer avec le milieu environnant dans lequel se propagent les ondes à atténuer. Le col assure ainsi la communication entre le milieu ambiant et la cavité d'air interne. Une fois le dispositif optimisé, le col assure un effet de dissipation visco-thermique, qui correspond à un mouvement rapide et alterné des ondes sonores au travers des extrémités du col provoquant de la dissipation par frottement.

Dans les technologies de traitement classique, la longueur du col est faible devant la hauteur de la cavité. Plus précisément, dans les technologies classiques, la longueur du col est égale à l'épaisseur d'une paroi en tôle composite (carbone + résine) qui constitue la surface mouillée du traitement, car le col est obtenu par simple perforation de cette paroi. On optimise le fonctionnement du résonateur de Helmholtz en dimensionnant la cavité d'air de façon à obtenir le maximum de vitesse acoustique au niveau du col. Cette optimisation impose des hauteurs de cavité de l'ordre du quart de la longueur d'onde de la fréquence principale à traiter. Elle offre par ailleurs des propriétés très intéressantes quant à l'importante largeur de bande fréquentielle couverte.

Cependant, les tendances actuelles pour l'optimisation des systèmes de propulsion sont orientées vers la diminution des nombres d'aubes et la réduction de la vitesse de rotation des ensembles tournants tel que le fan. Il en résulte un abaissement des fréquences du rayonnement acoustique.

L'optimisation des panneaux de traitement nécessite alors l'augmentation de leur épaisseur pour pouvoir augmenter la hauteur de la cavité et ainsi diminuer la fréquence d'accord des cavités résonantes des panneaux. Cela rend les panneaux incompatibles avec les contraintes de masse et d'encombrement associées aux nouvelles architectures de type UHBR (Ultra High Bypass Ratio), c'est-à-dire à très fort taux de dilution.

Il est toujours possible de dimensionner le résonateur de Helmholtz de sorte qu'il soit efficace sur des fréquences plus basses, pour un encombrement radial réduit, par exemple, en jouant à la fois sur la hauteur du col et sur le volume de la cavité résonante.

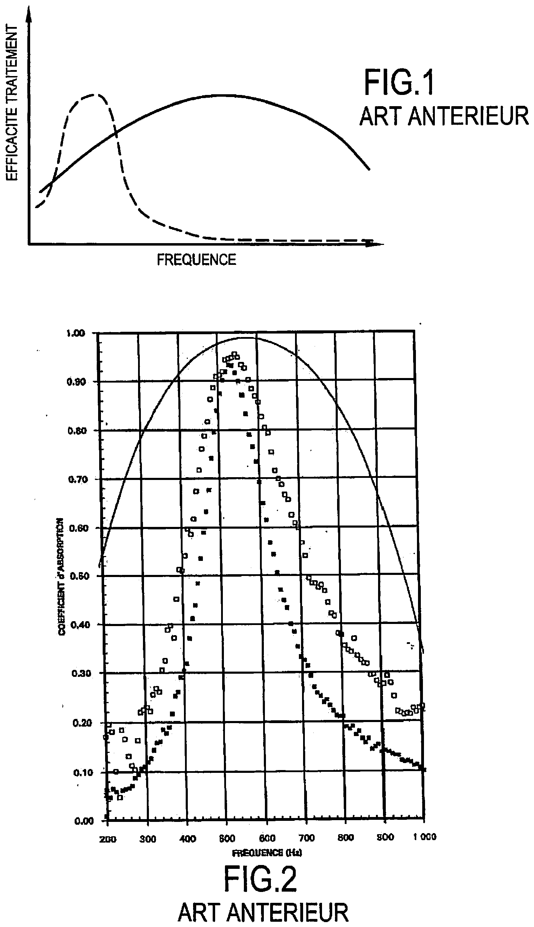

La contrepartie, pour ce type de dimensionnement sous contrainte d'un encombrement réduit donné, est que la bande de fréquence sur laquelle agit le traitement de manière optimale se trouve drastiquement réduite lorsque la fréquence diminue comme cela est illustré sur la figure 1 qui présente une courbe d'atténuation acoustique reportant l'efficacité de traitement en fonction de la fréquence pour un résonateur de Helmholtz classique en trait plein et un résonateur de Helmholtz dont les dimensions ont été réduites selon l'état de l'art en traits pointillés.

Les résultats issus de mesures, présentés sur la figure 2 sous forme de coefficients d'absorption, illustrent la performance basse fréquence centrée à 550Hz d'une structure à grand col dont l'épaisseur globale est de 26mm, pour un niveau sonore de 140 dB, dont les mesures sont représentées par les carrés blancs, et pour un niveau sonore de 156 dB, dont les mesures sont représentées par les carrés noirs, par rapport à un résonateur classique à base de tôle perforée bien plus épais, dont la courbe apparaît en trait plein, ce dernier nécessitant la mise en œuvre d'une cavité de 150mm pour une performance équivalente dans cette gamme de fréquences.

Cette restriction concernant la largeur de bande fréquentielle d'atténuation est très pénalisante, car la variation du régime de la soufflante selon les phases de vol engendre des évolutions importantes de sa fréquence d'émission sonore. De ce fait, le traitement dimensionné de cette façon ne sera efficace que pour un seul régime, et pour une plage fréquentielle ne pouvant pas descendre très bas en fréquence.

Il est connu des panneaux de traitement acoustique comprenant une tôle de carbone usinée avec des orifices oblongs ne servant que pour protéger une toile fine définissant des cols perpendiculaires à la tôle (à confirmer).

Il est aussi connu des systèmes de perforation de plaques pour former des plaques perforées pour panneaux de traitement acoustique.

Il est également connu des panneaux de traitement acoustique comprenant des résonateurs dotés de cols ajustables à au moins deux fréquences différentes montés sur des plaques perforées et s'étendant à l'intérieur de cavités formées par exemple par des alvéoles d'une structure en nid d'abeilles.

En outre, il est connu des panneaux de traitement acoustique comprenant une couche poreuse d'entrée dotée de canaux simples et formée par assemblage d'au moins deux plaques distinctes pouvant occasionner des fuites acoustiques aux interfaces. Le document US2010/206664 A1 divulgue un panneau de traitement acoustique connu.

Objet et résumé de l'invention

L'invention vise à fournir un panneau de traitement acoustique permettant de pallier les inconvénients mentionnés ci-dessus et comportant notamment des résonateurs capables d'atténuer le rayonnement associé au bruit des raies basses fréquences de façon efficace sur au moins un régime de turbomachine pour un encombrement fortement réduit par rapport à un traitement classique de type nid d'abeille et tout en conservant les processus classiques d'élaboration des traitements par nid d'abeille et en réduisant les fuites acoustiques.

Un objet de l'invention propose un panneau de traitement acoustique, notamment d'atténuation, destiné à être disposé sur au moins une paroi d'un turboréacteur en contact avec un écoulement fluidique, le panneau comprenant une première plaque acoustiquement réfléchissante, une seconde plaque présentant une première face destinée à être en contact avec un écoulement fluidique et une seconde face en regard de la première plaque, et une pluralité de cavités montées entre ladite première plaque et la seconde face de la seconde plaque, les cavités débouchant sur la première plaque d'une part et sur la seconde face de la seconde plaque d'autre part, et la seconde plaque présentant une épaisseur s'étendant entre la première et la seconde faces dans une direction orthogonale aux dites première et seconde faces.

Selon une caractéristique générale de l'invention, la seconde plaque est une plaque monobloc traversée par une pluralité de canaux débouchant chacun, d'une part, sur un premier orifice formé sur la première face et, d'autre part, sur un second orifice formé sur la seconde face, la longueur de chaque canal s'étendant entre son premier orifice et son second orifice étant supérieure ou égale à 1,5 fois l'épaisseur de ladite seconde plaque.

L'utilisation d'une plaque monobloc permet d'éviter des fuites liées notamment aux interfaces dans le cas d'une plaque multi-blocs.

Selon un premier mode de réalisation du panneau de traitement acoustique, la seconde plaque comprenant les canaux peut être une plaque générée par fabrication additive tridimensionnelle.

La réalisation de la seconde plaque monobloc par fabrication additive permet de concevoir des canaux avec des géométries complexes permettant de rallonger les canaux. Cette capacité d'allongement des canaux dans la seconde plaque fournie par les géométries complexes permet d'atténuer des fréquences plus basses sans augmenter l'épaisseur de la seconde plaque et/ou l'épaisseur du panneau.

Selon un deuxième mode de réalisation du panneau de traitement acoustique, les canaux peuvent présenter chacun une longueur dans la direction dans laquelle s'étend le canal dans la seconde plaque supérieure à la dimension la plus grande du premier orifice du canal.

Selon un troisième mode de réalisation du panneau de traitement acoustique, la section des canaux peut être comprise entre 0,2 mm$^2$ et 7 mm$^2$.

Selon un quatrième mode de réalisation du panneau de traitement acoustique, au moins une cavité peut déboucher sur une pluralité de canaux de la seconde plaque.

Selon un sixième mode de réalisation du panneau de traitement acoustique, la seconde plaque peut présenter une répartition homogène des canaux dans le plan dans lequel s'étend la seconde plaque.

Par répartition homogène des canaux dans le plan dans lequel s'étend la seconde plaque, on entend une répartition pour laquelle la distance entre chaque premier orifice sur la première face est sensiblement du même ordre de grandeur et la distance entre chaque second orifice sur la seconde face est sensiblement du même ordre de grandeur.

Selon un septième mode de réalisation du panneau de traitement acoustique, la seconde plaque peut présenter un gradient de répartition des canaux dans le plan dans lequel s'étend la seconde plaque.

Par gradient de répartition des canaux dans le plan dans lequel s'étend la seconde plaque, on entend une répartition pour laquelle la distance entre les orifices peut varier en fonction des différentes zones de la seconde plaque. Une telle configuration permet de faire varier la distance entre les canaux et ainsi de faire varier le volume disponible pour les canaux, et ainsi de faire varier la longueur des canaux en fonction des différentes zones, dans une plaque d'épaisseur constante et ainsi optimiser le traitement sur différentes fréquences.

En outre, le fait d'utiliser la fabrication additive avec un gradient de répartition ne fait pas varier le coût de production pour ce type de mise en œuvre plus complexe.

Selon un huitième mode de réalisation du panneau de traitement acoustique, chaque canal peut présenter une première et une seconde portions extrémales respectivement en contact avec les premier et second orifices, chacune des première et seconde portions extrémales s'étendant dans une direction formant un angle d'au plus 15° avec une droite orthogonale respectivement à la première ou la seconde face de la seconde plaque sur laquelle elle débouche.

L'angle d'au moins 15° formé par une portion extrémale du canal avec la face de la seconde plaque sur laquelle elle débouche favorise la perméabilité de la seconde plaque aux ondes acoustiques, notamment à

l'entrée dans le panneau, et améliore le fonctionnement des cavités en sortie de la seconde plaque.

Chaque canal peut présenter une première et une seconde portions extrémales respectivement en contact avec les premier et second orifices, chacune des première et seconde portions extrémales s'étendant dans une direction formant un angle d'au moins 15° avec respectivement la première ou la seconde face de la seconde plaque sur laquelle elle débouche.

L'angle d'au moins 15° formé par une portion extrémale du canal avec la face de la seconde plaque sur laquelle elle débouche favorise la perméabilité de la seconde plaque aux ondes acoustiques, notamment à l'entrée dans le panneau, et améliore le fonctionnement des cavités en sortie de la seconde plaque.

Selon un neuvième mode de réalisation du panneau de traitement acoustique, chaque canal peut présenter un rayon de courbure d'un minimum de 1 mm appliqué sur toute sa longueur

Le rayon de courbure des canaux favorise la perméabilité de la seconde plaque aux ondes acoustiques.

L'angle d'au moins 15° et le rayon de courbure d'au moins 1 mm permettent à l'onde de pouvoir rentrer et sortir du canal.

Dans le cas où l'angle est plus petit que 15° et/ou le rayon de courbure est inférieur à 1mm, l'onde arrivant sur la plaque ou se déplaçant dans le canal verra ces deux caractéristiques comme un « mur infranchissable» et sera donc réfléchie. Ces caractéristiques permettent d'avoir une perméabilité augmentée par rapport au cas où l'onde est réfléchie.

Selon un dixième mode de réalisation du panneau de traitement acoustique, la distance séparant la première plaque de la seconde plaque est de préférence supérieure ou égale au quart de la longueur du canal le plus long de la seconde plaque.

Selon un onzième mode de réalisation du panneau de traitement acoustique, les canaux de la seconde plaque sont de préférence séparés d'une distance supérieure ou égale à la dimension du plus grand orifice de la seconde plaque.

Selon un douzième mode de réalisation du panneau de traitement acoustique, les canaux peuvent présenter une géométrie tridimensionnelle.

Des formes contenues dans un plan sont considérées comme des formes simples, la troisième dimension étant l'épaisseur du canal. On parle alors de formes bidimensionnelles. Les formes tridimensionnelles évoluant dans toutes les directions sont des formes complexes. L'intérêt des formes tridimensionnelles est d'optimiser le dimensionnement des canaux en maximisant l'espace qu'ils occupent dans le volume de la seconde plaque.

Un autre objet de l'invention propose un turboréacteur comprenant au moins un panneau de traitement acoustique tel que défini ci-dessus.

Encore un autre objet de l'invention propose un aéronef comprenant au moins un turboréacteur tel que défini ci-dessus.

Brève description des dessins.

L'invention sera mieux comprise à la lecture faite ci-après, à titre indicatif mais non limitatif, en référence aux dessins annexés sur lesquels :

- la figure 1, déjà décrite, présente une courbe d'atténuation acoustique reportant l'efficacité de traitement en fonction de la fréquence de l'onde sonore pour deux cellules différentes selon l'état de la technique ;
- la figure 2, déjà décrite, présente un graphique représentant l'évolution du coefficient d'absorption en fonction de la fréquence de l'onde sonore pour trois cellules différentes selon l'état de la technique ;
- la figure 3 présente une vue en section d'un turboréacteur selon un mode de réalisation de l'invention, dans un plan longitudinal du turboréacteur ;
- la figure 4 illustre une vue partielle en perspective d'un panneau de traitement acoustique selon un mode de réalisation de l'invention ;
- les figures 5A à 5F représentent schématiquement des exemples de réalisations des canaux du panneau de traitement acoustique ;
- la figure 6 présente schématiquement une vue en section du panneau de traitement acoustique de la figure 4 ;
- la figure 7 présente schématiquement un zoom d'une portion d'un canal du panneau de traitement acoustique de la figure 4.

Description détaillée de modes de réalisation

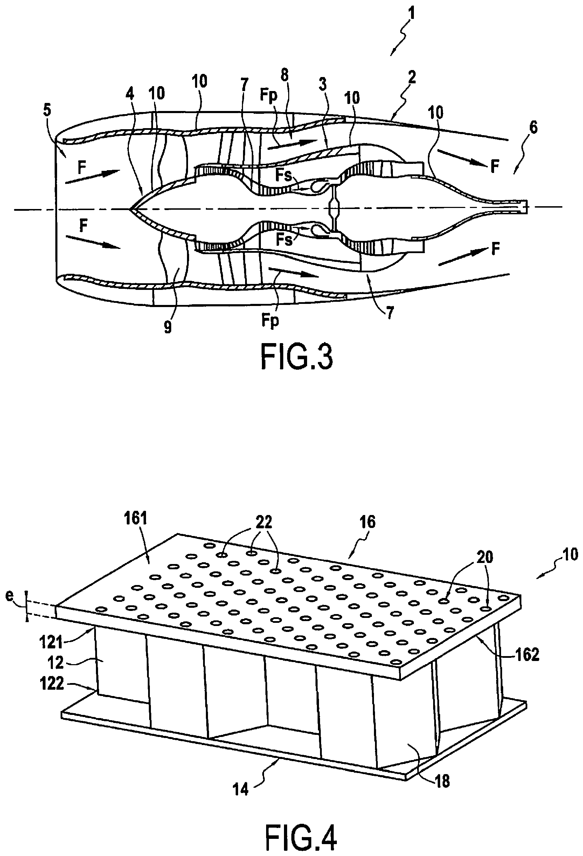

Sur la figure 3 est représentée une vue en section d'un turboréacteur 1 selon un mode de réalisation de l'invention, dans un plan longitudinal du turboréacteur 1.

Le turboréacteur 1 comprend une nacelle 2, un carter intermédiaire 3 et un carter interne 4. La nacelle 2 et les deux carters 3 et 4 sont coaxiaux. La nacelle 2 définit à une première extrémité un canal d'entrée 5 d'un écoulement de fluide et à une seconde extrémité, opposée à la première extrémité, un canal d'échappement 6 d'un écoulement de fluide. La nacelle 2 et le carter intermédiaire 3 délimitent entre eux une veine primaire 7 d'écoulement de fluide. Le carter intermédiaire 3 et le carter interne 4 délimitent entre eux une veine secondaire 8 d'écoulement de fluide. La veine primaire 7 et la veine secondaire 8 sont disposés selon une direction axiale du turboréacteur entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire $F_P$ circulant dans la veine primaire 7 et en un flux secondaire $F_S$ circulant dans la veine secondaire 8.

Le turboréacteur 1 comprend en outre au moins un panneau de traitement acoustique 10 configuré pour atténuer les ondes acoustiques émises par le turboréacteur avant que ces ondes ne s'échappent à l'extérieure, radialement, de la nacelle 2 du turboréacteur 1.

Chaque panneau de traitement acoustique 10 est configuré pour atténuer des ondes acoustiques dont la fréquence appartient à une plage de fréquences prédéterminée. Dans le mode de réalisation illustré sur la figure 3, les panneaux 10 de traitement acoustique sont intégrés à la nacelle 2, au carter intermédiaire 3 et au carter interne 4. Sur le carter interne 4, les panneaux 10 de traitement acoustique sont intégrés, d'une part, sur la portion en amont du carter intermédiaire 3 selon la direction axiale et notamment sur la portion portant la soufflante 9, et, d'autre part, sur une portion en aval du carter intermédiaire 3.

Sur la figure 4 est représentée une vue partielle en perspective d'un panneau de traitement acoustique 10 selon un mode de réalisation de l'invention.

En référence à la figure 4, le panneau de traitement acoustique 10 comporte un cœur 12, une couche réfléchissante 14 et une couche d'entrée 16.

Le cœur 12 présente une structure en nid d'abeille. Plus précisément, le cœur 12 comporte une pluralité d'alvéoles 18, agencées selon une structure en nid d'abeille connue.

Chaque alvéole 18 débouche sur une première face 121 du cœur 12 et sur une deuxième face 122 du cœur 18 située à l'opposé de la première face 121.

La première face 121 du cœur 12 est destinée à être orientée vers la veine d'air, primaire 7 ou secondaire 8 selon l'emplacement du panneau de traitement acoustique 10. La deuxième face 122 du cœur 12 est destinée à être orientée à l'opposé de la veine d'air.

De préférence, le cœur 12 est tel que la distance entre la première face 121 et la deuxième face 122 est de l'ordre du quart de la longueur d'onde correspondant à une fréquence de travail prédéterminée.

La fréquence de travail est une fréquence pour laquelle une atténuation acoustique maximale est souhaitée. La fréquence de travail appartient à la plage de fréquences prédéterminée.

Selon le mode de réalisation, le cœur 12 peut être réalisé en métal, ou dans un matériau composite, tel qu'un matériau composite formé de fibres de carbone noyées dans une matrice de résine durcie.

La couche réfléchissante 14 est adaptée pour réfléchir des ondes acoustiques présentant une fréquence appartenant à la plage de fréquences prédéterminée.

La couche réfléchissante 14 s'étend en regard de la deuxième face 122 du cœur 12, en étant au contact de la deuxième face 122. Plus précisément, la couche réfléchissante 14 est solidaire de la deuxième face 122 du cœur 12, par exemple collée à la deuxième face 122 du cœur 12.

Selon le mode de réalisation, la couche réfléchissante 14 peut être réalisée en métal ou dans un matériau composite, tel qu'un matériau composite formé de fibres de carbone noyées dans une matrice de résine durcie.

La couche d'entrée 16 s'étend en regard de la première face 121 du cœur 12, en étant au contact de la première face 121. Plus précisément, la couche d'entrée 16 est solidaire de la première face 121 du cœur 12, par exemple collée à la première face 121 du cœur 12.

La couche d'entrée 16 est une plaque monobloc formée par fabrication additive. Elle comprend une pluralité de canaux 20 traversant la couche d'entrée 16 depuis une première ouverture 22 réalisée sur la première face 161 de la couche d'entrée 16 jusqu'à une seconde ouverture 24 réalisée sur la seconde face 162 de la couche d'entrée 16. La seconde ouverture 24 de chaque canal 20 débouche sur une alvéole 18 du cœur 12, plusieurs canaux 20 pouvant déboucher sur une même alvéole 18.

Pour augmenter la longueur des canaux 20 et ainsi diminuer les fréquences des ondes sonores qui peuvent être traitées par le panneau 10 de traitement acoustique, les canaux 20 s'étendent dans la couche d'entrée 16 de manière à avoir une longueur supérieure à l'épaisseur e de la couche d'entrée 16, l'épaisseur e de la couche d'entrée correspondant à la distance séparant la première face 161 de la seconde face 162 de la couche d'entrée mesurée dans une direction orthogonale aux plans dans lesquelles s'étendent les deux faces 161 et 162 de la couche d'entrée 16.

Les canaux 20 peuvent avoir des formes simples ou, de préférence, complexes. Les formes complexes tridimensionnelles permettent d'optimiser le dimensionnement des cols en maximisant l'espace qu'ils occupent dans le volume de la couche d'entrée 16.

Les canaux, simples ou complexes, ont préférentiellement des longueurs supérieures à 1,5 fois l'épaisseur e de la couche d'entrée 16.

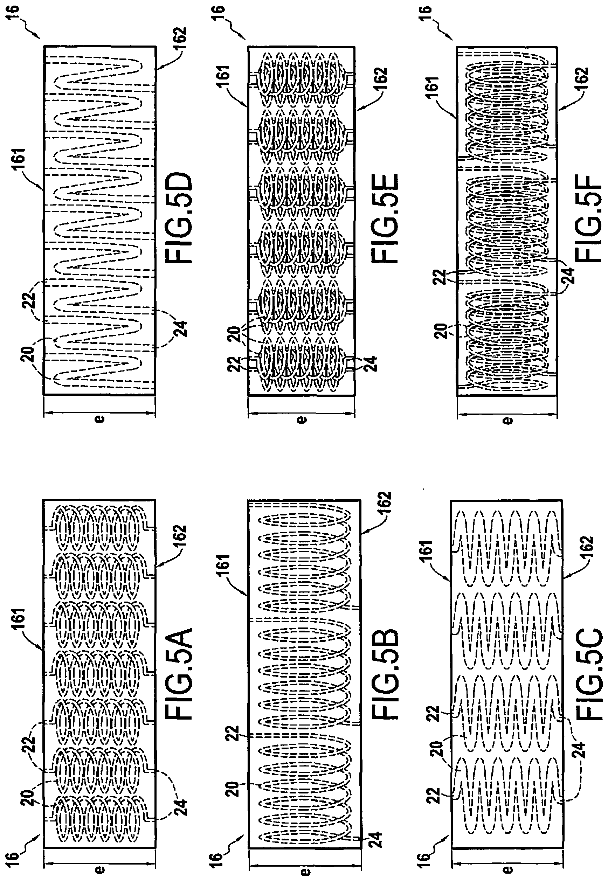

Les figures 5A à 5F représentent schématiquement des exemples de réalisations des canaux du panneau de traitement acoustique 10.

La figue 5A présente une couche d'entrée 16 avec des canaux 20 présentant une forme d'hélicoïde orientée selon l'épaisseur e de la couche d'entrée 16. Le trajet du canal 20 correspond à une hélicoïde qui s'enroule autour d'un axe orienté selon l'épaisseur e de la couche d'entrée 16.

La figue 5B présente une couche d'entrée 16 avec des canaux 20 présentant une forme d'hélicoïde orientée perpendiculairement à l'épaisseur e de la couche d'entrée 16. Le trajet du canal 20 correspond à une hélicoïde qui s'enroule autour d'un axe orienté perpendiculairement à l'épaisseur e de la couche d'entrée 16.

La figue 5C présente une couche d'entrée 16 avec des canaux 20 en forme de serpentin orienté selon l'épaisseur e de la couche d'entrée 16. Un serpentin présente une pluralité de coudes et s'étend généralement dans un même plan. Le trajet du canal 20 correspond à un serpentin dont la plus grande longueur est orientée dans l'épaisseur e de la couche d'entrée 16.

La figue 5D présente une couche d'entrée 16 avec des canaux 20 présentant en forme de serpentin orienté perpendiculairement à l'épaisseur e de la couche d'entrée 16. Le trajet du canal 20 correspond à un serpentin dont la plus grande longueur est orientée perpendiculairement à l'épaisseur e de la couche d'entrée 16.

La figure 5E présente une couche d'entrée 16 avec des canaux 20 présentant une configuration en double hélicoïde. Deux canaux adjacents s'enroulent en doublé hélicoïde dont l'axe est orienté selon l'épaisseur e de la couche d'entrée 16. Le trajet de chaque canal 20 correspond à une hélicoïde qui s'enroule autour d'un axe orienté selon l'épaisseur e de la couche d'entrée 16. Ce type de configuration, en combinaison de plusieurs canaux, peut présenter l'avantage de minimiser les courbures du canal, et donc la résistivité acoustique de celui-ci.

La figure 5F présente une couche d'entrée 16 avec deux canaux adjacents s'enroulant en doublé hélicoïde dont l'axe est orienté perpendiculairement à l'épaisseur e de la couche d'entrée 16. Le trajet de chaque canal 20 correspond à une hélicoïde qui s'enroule autour d'un axe orienté perpendiculairement à l'épaisseur e de la couche d'entrée 16.

Il est aussi envisageable une configuration multi-hélicoïdale avec plusieurs canaux voisins s'enroulant suivant une hélicoïde d'axe commun, orienté suivant l'épaisseur e de la couche d'entrée ou perpendiculairement à celle-ci.

Toute autre superposition de motifs réguliers peut aussi être envisagé.

Des technologies de type impression tridimensionnelle sur lit de poudre ou par dépose de matière peuvent être envisagées pour concevoir la couche d'entrée. Il suffit de pouvoir atteindre une certaine précision, de l'ordre de 0,1 mm minimum.

Cette optimisation permet d'accorder le traitement sur des fréquences plus basses sans augmenter de manière significative la hauteur total du traitement et en conservant les processus classiques d'élaboration des traitements nid d'abeille.

De préférence, l'accord en fréquence du panneau de traitement acoustique 10 respecte, en première approximation, l'équation suivante :

$$ F = \frac{C}{2\pi} \sqrt{\frac{S}{Vl'}} $$

Avec F la fréquence d'accord en Hertz, C la célérité du son en mètre par seconde, S la section du canal en mètre carré, V le volume du résonateur en mètre, l' la longueur de canal corrigée, où

$$ l' = l + \delta $$

avec l la longueur géométrique du canal, et $\delta$ la correction du canal où

$$ \delta = 1{,}7r\left(1 - 0{,}7\sqrt{\sigma}\right) $$

pour des résonateurs juxtaposés, avec r le rayon d'un orifice, et $\sigma$ le taux de perforation.

De préférence, la longueur du canal est supérieure à son diamètre, au moins 1,5 fois supérieure, pour garantir les propriétés recherchées à la colonne d'air qu'il contient. La distance entre la seconde ouverture 24 des canaux 20, autrement dit, la seconde face 162 de la couche d'entrée, et la couche réfléchissante 14 est supérieure au quart de la hauteur du canal. La section du canal est comprise entre 0,2 mm$^2$ et 7 mm$^2$. Une même cavité peut contenir plusieurs cols. L'espacement entre chaque col doit être supérieur à un diamètre de col.

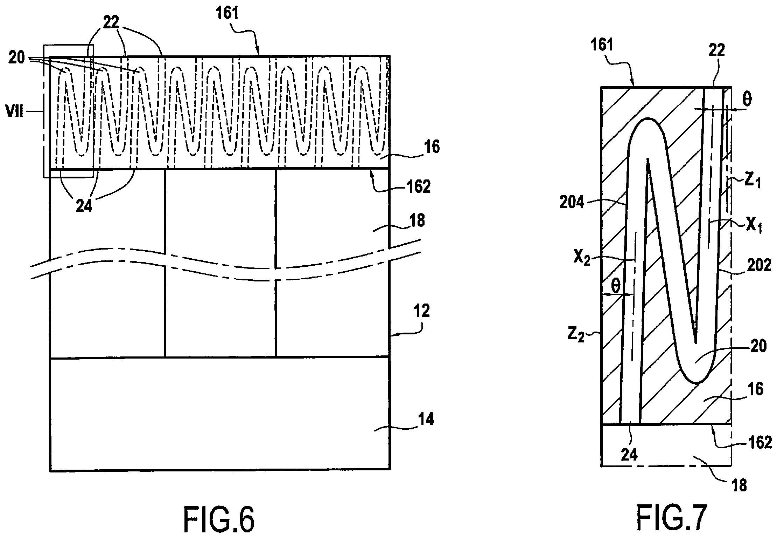

Comme cela est illustré sur la figure 6 qui présente schématiquement une vue en section du panneau de traitement acoustique de la figure 4, chaque cavité 18 du cœur 12 débouche sur une pluralité de canaux 20 de la couche d'entrée 16. Autrement dit, plusieurs canaux 20 de la couche d'entrée 16 débouche sur une même cavité 18 du cœur 12.

Par ailleurs, comme cela est illustré sur la figure 7 qui présente schématiquement un zoom d'une portion d'un canal du panneau de traitement acoustique de la figure 4, chaque canal 20 présente de préférence une première portion extrémale 202 s'étendant depuis la première ouverture 22 et une seconde portion extrémale 204 s'étendant depuis la seconde ouverture 24. Chacune des première et seconde portions extrémales 202 et 204 s'étend dans l'épaisseur de la couche d'entrée 16, depuis respectivement la première et la seconde ouvertures 22 et 24, dans une direction, respectivement $X_1$ et $X_2$, formant un angle $\theta$ d'au plus 15° avec une droite, respectivement $Z_1$ et $Z_2$, orthogonale au plan dans lequel s'étend la couche d'entrée 16.

Autrement dit, chacune des première et seconde portions extrémales 202 et 204 s'étend dans une direction formant un angle compris 75° et 90° avec la face de la couche d'entrée 16 sur laquelle elle débouche, soit respectivement la première face 161 et la seconde face 162. Cet angle favorise la perméabilité de la couche d'entrée 16 aux ondes acoustiques, notamment à l'entrée dans le panneau 10, et améliore le fonctionnement des cavités 18 en sortie de la couche d'entrée 16.

L'invention fournit ainsi un panneau de traitement acoustique permettant de pallier les inconvénients mentionnés ci-dessus et comportant notamment des résonateurs capables d'atténuer le rayonnement associé au bruit des raies basses fréquences de façon efficace sur un régime de turbomachine pour un encombrement fortement réduit par rapport à un traitement classique de type nid d'abeille et tout en conservant les processus classiques d'élaboration des traitements par nid d'abeille.

**Revendications**

1. Panneau (10) de traitement acoustique destiné à être disposé sur au moins une paroi d'un turboréacteur (1) en contact avec un écoulement fluidique, le panneau (10) comprenant une première plaque (14), une seconde plaque (16) présentant une première face (161) destinée à être en contact avec un écoulement fluidique (F, Fp, F$_S$) et une seconde face (162) en regard de la première plaque (14), et une pluralité de cavités (18) montées entre ladite première plaque (14) et la seconde face (162) de la seconde plaque (16), les cavités (18) débouchant sur la première plaque (14) d'une part et sur la seconde face (162) de la seconde plaque (16) d'autre part, et la seconde plaque (16) présentant une épaisseur (e) s'étendant entre la première et la seconde faces (161, 162) dans une direction orthogonale aux dites première et seconde faces (161, 162), **caractérisé en ce que** la seconde plaque (16) est une plaque monobloc traversée par une pluralité de canaux (20) débouchant chacun sensiblement perpendiculairement, d'une part, sur un premier orifice (22) formé sur la première face (161) et, d'autre part, sur un second orifice (24) formé sur la seconde face (162), la longueur de chaque canal s'étendant entre son premier orifice (22) et son second orifice (24) étant supérieure ou égale à 1,5 fois l'épaisseur (e) de ladite seconde plaque (16).

2. Panneau (10) selon la revendication 1, dans lequel les canaux (20) sont orientés selon l'épaisseur (e) ou perpendiculairement à l'épaisseur (e) de ladite seconde plaque (16).

3. Panneau (10) selon l'une quelconque des revendications 1 ou 2, dans lequel la section des canaux (20) est comprise entre 0,2 mm$^2$ et 7 mm$^2$.

4. Panneau (10) selon l'une quelconque des revendications 1 à 3, dans lequel au moins une cavité (18) débouche sur une pluralité de canaux (20) de la seconde plaque (16).

5. Panneau (10) selon l'une quelconque des revendications 1 à 4, dans lequel la seconde plaque (16) présente une répartition homogène des canaux (20) dans le plan dans lequel s'étend la seconde plaque (16).

6. Panneau (10) selon l'une quelconque des revendications 1 à 4, dans lequel la seconde plaque (16) présente un gradient de répartition des canaux (20) dans le plan dans lequel s'étend la seconde plaque (16).

7. Panneau (10) selon l'une quelconque des revendications 1 à 6, dans lequel chaque canal (20) présente une première et une seconde portions extrémales (202, 204) respectivement en contact avec les premier et second orifices (22, 24), chacune des première et seconde portions extrémales (202, 204) s'étendant dans une direction (X$_1$, X$_2$) formant un angle (θ) d'au moins 15° respectivement avec la première ou seconde face (161, 162) de la seconde plaque (16) sur laquelle elle débouche.

8. Panneau (10) selon l'une quelconque des revendications 1 à 7, dans lequel chaque canal (20) présente un rayon de courbure d'un minimum de 1 mm appliqué sur toute sa longueur.

9. Panneau (10) selon l'une quelconque des revendications 1 à 8, dans lequel la distance séparant la première plaque (14) de la seconde plaque (16) est supérieure ou égale au quart de la longueur du canal (20) le plus long de la seconde plaque (16).

10. Panneau (10) selon l'une quelconque des revendications 1 à 9, dans lequel les canaux (20) de la seconde plaque (16) sont séparés d'une distance supérieure ou égale à la dimension du plus grand orifice de la seconde plaque (16).

11. Panneau (10) selon l'une quelconque des revendications 1 à 10, dans lequel les canaux (20) présentent une géométrie complexe tridimensionnelle en forme de serpentin, hélicoïde, double-hélicoïde ou multi-hélicoïdes.

12. Panneau (10) selon l'une quelconque des revendications 1 à 11, dans lequel la première plaque (14) est une couche acoustiquement réfléchissante.

13. Procédé de fabrication d'un panneau de traitement acoustique (10) selon l'une quelconque des revendications 1 à 12 dans lequel la seconde plaque (16) comprenant les canaux (20) est une plaque générée par fabrication additive tridimensionnelle.

14. Turboréacteur (1) comprenant au moins un panneau de traitement acoustique (10) selon l'une quelconque des revendications 1 à 12.

15. Aéronef comprenant au moins un turboréacteur (1) selon la revendication 14.

**Patentansprüche**

1. Schalldämmplatte (10), die dazu bestimmt ist, an mindestens einer Wand eines Turbostrahltriebwerks (1) in Kontakt mit einem Fluidstrom angeordnet zu werden, wobei die Platte (10) eine erste Platte (14), eine zweite Platte (16) mit einer ersten Seite (161), die dazu bestimmt ist, in Kontakt mit einem Fluidstrom (F, $F_P$, $F_S$) zu stehen, und einer zweiten Seite (162), die der ersten Platte (14) zugewandt ist, und eine Vielzahl von Hohlräumen (18) umfasst, die zwischen der ersten Platte (14) und der zweiten Seite (162) der zweiten Platte (16) montiert sind, wobei die Hohlräume (18) einerseits in die erste Platte (14) und andererseits in die zweite Seite (162) der zweiten Platte (16) münden, und die zweite Platte (16) eine Dicke (e) aufweist, die sich zwischen der ersten und der zweiten Seite (161, 162) in einer Richtung orthogonal zu der ersten und der zweiten Seite (161, 162) erstreckt,

**dadurch gekennzeichnet, dass** die zweite Platte (16) eine einstückige Platte ist, die von einer Vielzahl von Kanälen (20) durchsetzt ist, die jeweils im Wesentlichen senkrecht einerseits in eine erste Öffnung (22), die auf der ersten Seite (161) ausgebildet ist, und andererseits in eine zweite Öffnung (24), die auf der zweiten Seite (162) ausgebildet ist, münden, wobei die Länge jedes Kanals, der sich zwischen seiner ersten Öffnung (22) und seiner zweiten Öffnung (24) erstreckt, größer oder gleich dem 1,5-fachen der Dicke (e) der zweiten Platte (16) ist.

2. Platte (10) nach Anspruch 1, wobei die Kanäle (20) entlang der Dicke (e) oder senkrecht zur Dicke (e) der zweiten Platte (16) ausgerichtet sind.

3. Platte (10) nach einem der Ansprüche 1 oder 2, wobei der Querschnitt der Kanäle (20) zwischen 0,2 mm$^2$ und 7 mm$^2$ liegt.

4. Platte (10) nach einem der Ansprüche 1 bis 3, wobei mindestens ein Hohlraum (18) in eine Vielzahl von Kanälen (20) der zweiten Platte (16) mündet.

5. Platte (10) nach einem der Ansprüche 1 bis 4, wobei die zweite Platte (16) eine homogene Verteilung der Kanäle (20) in der Ebene aufweist, in der sich die zweite Platte (16) erstreckt.

6. Platte (10) nach einem der Ansprüche 1 bis 4, wobei die zweite Platte (16) einen Gradienten in der Verteilung der Kanäle (20) in der Ebene aufweist, in der sich die zweite Platte (16) erstreckt.

7. Platte (10) nach einem der Ansprüche 1 bis 6, wobei jeder Kanal (20) einen ersten und einen zweiten Endabschnitt (202, 204) aufweist, die jeweils mit der ersten und der zweiten Öffnung (22, 24) in Kontakt stehen, wobei sich jeder der ersten und zweiten Endabschnitte (202, 204) in einer Richtung ($X_1$, $X_2$) erstreckt, die jeweils einen Winkel ($\theta$) von mindestens 15° mit der ersten oder der zweiten Seite (161, 162) der zweiten Platte (16) bildet, in die er mündet.

8. Platte (10) nach einem der Ansprüche 1 bis 7, wobei jeder Kanal (20) einen Krümmungsradius von mindestens 1 mm aufweist, der über seine gesamte Länge angewendet wird.

9. Platte (10) nach einem der Ansprüche 1 bis 8, wobei der Abstand zwischen der ersten Platte (14) und der zweiten Platte (16) größer oder gleich einem Viertel der Länge des längsten Kanals (20) der zweiten Platte (16) ist.

10. Platte (10) nach einem der Ansprüche 1 bis 9, wobei die Kanäle (20) der zweiten Platte (16) um einen Abstand voneinander getrennt sind, der größer oder gleich der Abmessung der größten Öffnung der zweiten Platte (16) ist.

11. Platte (10) nach einem der Ansprüche 1 bis 10, wobei die Kanäle (20) eine komplexe dreidimensionale Geometrie in Form einer Serpentine, einer Helix, einer Doppelhelix oder einer Multihelix aufweisen.

12. Platte (10) nach einem der Ansprüche 1 bis 11, wobei die erste Platte (14) eine schallreflektierende Schicht ist.

13. Verfahren zur Herstellung einer Schalldämmplatte (10) nach einem der Ansprüche 1 bis 12, wobei die zweite Platte (16) mit den Kanälen (20) eine Platte ist, die durch dreidimensionale additive Fertigung erzeugt wird.

14. Turbostrahltriebwerk (1) mit mindestens einer Schalldämmplatte (10) nach einem der Ansprüche 1 bis 12.

15. Luftfahrzeug mit mindestens einem Turbostrahltriebwerk (1) nach Anspruch 14.

**Claims**

1. An acoustic treatment panel (10) intended to be disposed on at least one wall of a turbojet engine (1) in contact with a fluid flow, the panel (10) comprising a first plate (14), a second plate (16) having a first face (161) intended to be in contact with a fluid flow (F, $F_P$, $F_S$) and a second face (162) opposite the first plate (14), and a plurality of cavities (18) mounted between said first plate (14) and the second face (162) of the second plate (16), the cavities (18) opening out onto the first plate (14) on the one hand and onto the second face (162) of the second plate (16) on the other hand, and the second plate (16) having a thickness (e) extending between the first and second faces (161, 162) in a direction orthogonal to said first and second faces (161, 162),

**characterized in that** the second plate (16) is a one-piece plate through which a plurality of channels (20) pass, each opening out substantially perpendicularly, on the one hand, onto a first orifice (22) formed on the first face (161) and on the other hand onto a second orifice (24) formed on the second face (162), the length of each channel extending between its first orifice (22) and its second orifice (24) being greater than or equal to 1.5 times the thickness (e) of said second plate (16).

2. The panel (10) according to claim 1, wherein the channels (20) are oriented along the thickness (e) or perpendicular to the thickness (e) of said second plate (16).

3. The panel (10) according to any one of claims 1 or 2, wherein the section of the channels (20) is comprised between 0.2 mm² and 7 mm².

4. The panel (10) according to any one of claims 1 to 3, wherein at least one cavity (18) opens out onto a plurality of channels (20) of the second plate (16).

5. The panel (10) according to any one of claims 1 to 4, wherein the second plate (16) has a homogeneous distribution of the channels (20) in the plane in which the second plate (16) extends.

6. The panel (10) according to any one of claims 1 to 4, wherein the second plate (16) has a distribution gradient of the channels (20) in the plane in which the second plate extends (16).

7. The panel (10) according to any one of claims 1 to 6, wherein each channel (20) has a first and a second end portion (202, 204) respectively in contact with the first and second orifices (22, 24), each of the first and second end portions (202, 204) extending in a direction $(X_1, X_2)$ forming an angle $(\theta)$ of at least 15° respectively with the first or second face (161, 162) of the second plate (16) onto which it opens out.

8. The panel (10) according to any one of claims 1 to 7, wherein each channel (20) has a radius of curvature of a minimum of 1 mm applied over its entire length.

9. The panel (10) according to any one of claims 1 to 8, wherein the distance separating the first plate (14) from the second plate (16) is greater than or equal to one quarter of the length of the longest channel (20) of the second plate (16).

10. The panel (10) according to any one of claims 1 to 9, wherein the channels (20) of the second plate (16) are separated by a distance greater than or equal to the dimension of the largest orifice of the second plate (16).

11. The panel (10) according to any one of claims 1 to 10, wherein the channels (20) have a complex serpentine, helicoid, double-helicoid or multi-helicoid shaped three-dimensional geometry.

12. The panel (10) according to any one of claims 1 to 11, wherein the first plate (14) is an acoustically reflective layer.

13. A method for manufacturing an acoustic treatment panel (10) according to any one of claims 1 to 12, wherein the second plate (16) comprising the channels (20) is a plate generated by three-dimensional additive manufacturing.

14. A turbojet engine (1) comprising at least one acoustic treatment panel (10) according to any one of claims 1 to 12.

15. An aircraft comprising at least one turbojet engine (1) according to claim 14.

FIG.1
ART ANTERIEUR

FIG.2
ART ANTERIEUR

FIG.3

FIG.4

FIG.5A

FIG.5D

FIG.5B

FIG.5E

FIG.5C

FIG.5F

EP 3 775 524 B1

FIG.6

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010206664 A1